# EUROPÄISCHE PATENTSCHRIFT

(11) **EP 2 638 353 B1**
(45) Veröffentlichungstag und Bekanntmachung des Hinweises auf die Patenterteilung: **11.03.2015**
(21) Anmeldenummer: 11778840.6
(22) Anmeldetag: 26.10.2011
(51) Int. Cl.: F41B 7/00, G01N 3/307

(54) **VORRICHTUNG UND VERFAHREN ZUM DEFINIERTEN BESCHLEUNIGEN EINES PROJEKTILS**
APPARATUS AND METHOD FOR DEFINED ACCELERATION OF A PROJECTILE
DISPOSITIF ET PROCÉDÉ D'ACCÉLÉRATION DÉFINIE D'UN PROJECTILE

(30) Priorität: 12.11.2010 EP 10190937
(43) Veröffentlichungstag der Anmeldung: 18.09.2013
(73) Patentinhaber: Saint-Gobain Glass France, 92400 Courbevoie (FR)
(72) Erfinder: MOREAU, Aurore, 52134 Herzogenrath (DE); KREMERS, Stephan, 52525 Heinsberg (DE); GOFFIN, Ingo, 52134 Herzogenrath (DE)
(74) Vertreter: Gebauer, Dieter Edmund
(86) Internationale Anmeldenummer: PCT/EP2011/068773
(87) Internationale Veröffentlichungsnummer: WO 2012/062578

(56) Entgegenhaltungen:
- WO-A1-03/056303
- US-A- 5 739 411
- US-A1- 2006 169 263

## Beschreibung

Die Erfindung betrifft eine Vorrichtung zum definierten Beschleunigen eines Projektils und deren Verwendung.

Trotz seiner hohen Oberflächenhärte ist Glas ein oft spröder und häufig leicht zerbrechlicher Werkstoff. In vielen Fällen wird Glas jedoch in sicherheitsrelevanten Bereichen eingesetzt. Zum Überprüfen der Materialeigenschaften, insbesondere der Beständigkeit von Glas kommen eine Vielzahl von Testverfahren zum Einsatz. Ein wichtiges Kriterium kann beispielsweise die Stabilität einer Glasscheibe gegenüber auftreffenden kleinen Gegenständen sein. Dies können kleine Steine sein, die während der Fahrt auf die Windschutzscheibe eines Fahrzeuges, Flugzeuges oder Eisenbahn treffen. In Abhängigkeit von ihrem Gewicht und der Eigengeschwindigkeit können daraus größere Schäden oder eine zerbrochene Scheibe resultieren. Die Stabilität einer Scheibe wird in der Regel mit Hilfe von Kugelfalltests überprüft. Hierzu werden Stahlkugeln mit bekannten Durchmessern und Gewichten aus einer bekannten Höhe auf eine Scheibe fallen gelassen. Aus dem entstehenden Bruchbild oder auch der Abwesenheit eines solchen, lassen sich Rückschlüsse auf die Stabilität der Scheibe ziehen. Diese einfachen Kugelfalltests lassen sich jedoch nicht auf alle möglichen Gefahrensituationen übertragen. Insbesondere bei dem genannten Steinschlag weisen die Steine häufig eine hohe Geschwindigkeit und damit hohe kinetische Energie auf. Die beim Aufprall freiwerdende Energie bewirkt häufig eine ernsthafte Beschädigung der Scheibe.

Eine Abschätzung der Stabilität und Beständigkeit einer Scheibe lässt sich jedoch nur bei genau definierten Versuchsbedingungen vornehmen. Insbesondere die Abschätzung der Geschwindigkeit und Beschleunigung des Testprojektils ist in der Praxis häufig sehr schwierig. Aufgrund des niedrigen Eigengewichtes des Projektils reichen einfache Kugelfallexperimente nicht aus, um die erforderliche Geschwindigkeit und kinetische Energie beim Aufprall bereitzustellen. Das Projektil muss durch weitere mechanische Elemente wie Spiralen oder Gummis beschleunigt werden. Auch in diesen Fällen ist eine genaue und reproduzierbare Einstellung der kinetischen Energie des Projektils schwierig. Durch den Einsatz von Lichtschranken oder CCD-Kameras lässt sich zwar die Geschwindigkeit und damit die kinetische Energie eines Projektils recht genau bestimmen. In vielen Fällen weichen die Ergebnisse der kinetischen Energie jedoch zwischen den einzelnen Messungen stark voneinander ab.

DE 36 07 738 C1 offenbart eine Einrichtung zum Ausbessern von Windschutzscheiben aus mehrschichtigen Sicherheitsglas.

US2002014778 A1 offenbart ein Verfahren zum Schutz von Windschutzscheiben eines Kraftfahrzeuges vor Steinschlag. Die Schutzwirkung wird durch eine resistente Barriere im Randbereich der Scheibe erzeugt.

GB552544 A offenbart eine Vorrichtung zum Testen von Glasflaschen. Die Vorrichtung erlaubt eine Bewegung der Flasche in definierten Bahnen und den Abwurf von Gewichten auf die zu testende Glasflasche.

US2006/0169263 A1 offenbart eine Vorrichtung zum Abschuss von Projektilen, insbesondere branderzeugende Projektile aus Kaliumpermanganat und einem Glykol zur Bekämpfung von Waldbränden.

Die Aufgabe der Erfindung liegt darin, eine Vorrichtung und ein Verfahren bereitzustellen, welche einen reproduzierbaren Beschuss einer Glasscheibe mit einem geeigneten Testprojektil ermöglicht.

Die Aufgabe der vorliegenden Erfindung wird erfindungsgemäß durch den unabhängigen Anspruch 1 gelöst. Bevorzugte Ausführungen gehen aus den Unteransprüchen hervor.

Ein erfindungsgemäßes Verfahren zur Glasbruchprüfung und die erfindungsgemäße Verwendung der Vorrichtung gehen aus weiteren nebengeordneten Ansprüchen hervor.

Die erfindungsgemäße Vorrichtung zum definierten Beschleunigen eines Projektils umfasst mindestens einen Hohlkörper. Der Hohlkörper kann aus einem Werkstück gefertigt sein oder aus mehren Werkstücken zusammengesetzt sein. Der im Hohlkörper befindliche Hohlraum wird von einer durchgehend verbundenen Justierkammer und einer Projektilkammer gebildet. Die Justierkammer und die Projektilkammer sind durchgehend miteinander verbunden und weisen jeweils bevorzugt kreisförmigen, Durchmesser auf. Der Durchmesser der Projektilkammer ist bevorzugt mindestens 30 % kleiner als der Durchmesser der Justierkammer. Die Justierkammer enthält einen Justagezylinder mit einem Endstück und einer am Endstück befestigten Justierschraube mit Schraubgewinde. Mit Hilfe der Justierschraube lässt sich die Position des Justagezylinders in der Justierkammer entlang der innerhalb des Hohlraums verlaufenden gedachten Mittelachse variieren. Der Justagezylinder enthält einen beweglich angeordneten Justageblock. Die mit der Justierkammer verbundene Projektilkammer enthält eine Projektilhalterung mit Projektil sowie einen Stopper mit Hohlraum der nur für das Projektil aber nicht für die Projektilhalterung durchlässig ist. Die Projektilhalterung und der Justageblock sind durch eine mechanische Feder gespannt verbunden. Sobald der an der Projektilhalterung befindliche, bewegliche Entlastungsstift entfernt ist, geht die Feder vom gespannten Zustand in den entspannten Zustand über. Die dabei freiwerdende potentielle Energie bewirkt eine Beschleunigung der Projektilhalterung und des darin befindlichen Projektils. Das Projektil kann die Projektilkammer und den Hohlkörper entgegengesetzt zur Justierkammer verlassen, während der Projektilhalter am Stopper zurückgehalten wird. Der Stopper verhindert somit eine vollständige Entspannung der zwischen der Projektilhalterung und der durch Einstellung fixierten Justagezylinders befindlichen Feder oder Spirale. Die Kontaktflächen zwischen der Projektilhalterung und der Innenwand der Projektilkammer enthalten bevorzugt eine Beschichtung eines niedrigviskosen Öls, bevorzugt kleiner als 10 mPa*s. Die Justierkammer, die Projektilkammer, Justagezylinder und der Justageblock weisen bevorzugt einen im Querschnitt kreisförmigen Durchmesser auf. Die erfindungsgemäße Vorrichtung ermöglicht eine konstante kinetische Energie des Projektils bei allen Untersuchungsreihen.

Der Justageblock umfasst bevorzugt einen am Justageblock befestigten Griff. Der Hohlkörper, die Justierkammer und der Justagezylinder enthalten bevorzugt eine schlitzförmige Öffnung, welche von außerhalb des Hohlkörpers ein Verschieben des Justageblocks über den am Justageblock befestigten Griff ermöglicht.

Der Justagezylinder weist bevorzugt einen Schlitz und mit dem Schlitz verbundene Einkerbungen auf. Die Einkerbungen ermöglichen ein fixieren des am Justageblocks befestigten Griffs. Über die Einkerbungen lässt sich die Position des Justageblocks innerhalb des Justagezylinders festlegen.

Der Hohlkörper, Justagezylinder und/oder Justageblock enthalten bevorzugt ein Metall, bevorzugt Aluminium, Titan, Eisen, Chrom, Vanadium, Kobalt, Nickel, Wolfram und/oder Legierungen davon. In einer alternativen Ausgestaltung ist der Hohlkörper aus zwei halbgeöffneten Körpern zusammengesetzt.

Der Hohlkörper oder Justageblock enthalten bevorzugt ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbonatblends wie Polycarbonat/Polyethylenterephthalat; Polycarbonat/Acrylnitril-Butadien-Styrol; Polycarbonat/Polybutylenterephthalat.

Die Feder enthält bevorzugt ein Metall, besonders bevorzugt Aluminium, Titan, Eisen, Chrom, Vanadium, Kobalt, Nickel, Wolfram und/oder Legierungen davon, sowie insbesondere bevorzugt Klavierdraht.

Die Feder weist bevorzugt eine Federkonstante einen Wert von 5 N/m bis 100 N/m, bevorzugt 10 N/m bis 50 N/m, auf. Über unterschiedliche Federn mit entsprechenden Federkonstanten lässt sich die auf das Projektil wirkende Kraft weiter einstellen. Die Feder überträgt gemäß dem Hook'schen Gesetz eine Kraft F = -kΔX, wobei k der Federkonstanten und ΔX der Auslenkung aus der Gleichgewichtslage entsprechen. Das Hook'sche Gesetz erlaubt insbesondere bei kleineren Auslenkungen der Feder eine recht präzise Berechnung der auf das Projektil wirkenden Kraft.

Die Projektilhalterung, der Stopper und der Entlastungsstift enthalten bevorzugt ein Polymer, besonders bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, insbesondere bevorzugt Polycarbonatblends wie Polycarbonat/Polyethylenterephthalat; Polycarbonat/Acrylnitril-Butadien-Styrol; Polycarbonat/Polybutylenterephthalat.

Die Justierkammer weist bevorzugt einen Durchmesser von 0,2 cm bis 10 cm, besonders bevorzugt von 0,5 cm bis 5 cm auf.

Die Projektilkammer weist bevorzugt einen Durchmesser von 0,1 cm bis 3 cm, besonders bevorzugt von 0,5 cm bis 2 cm auf.

Das Projektil weist bevorzugt einen konischen, zylinderförmigen oder kugelförmigen Grundkörper auf. Die Form des Grundkörpers entspricht bevorzugt der Form des Innenraums der Projektilkammer.

Das Projektil weist bevorzugt ein Gewicht von 1 g bis 10 g, bevorzugt 2 g bis 5 g auf.

Die Erfindung umfasst des Weiteren eine Vorrichtung zum Testen der Bruchbeständigkeit von Glas. Dazu wird eine wie oben beschriebene Vorrichtung aus Hohlkörper mit im Hohlraum befindlichen, durchgehend verbundenen Justierkammer und Projektilkammer in ein Stativ über eine Stativbefestigung eingespannt. Senkrecht zur Vorrichtung wird die zu untersuchende Scheibe platziert. Die Scheibe wird bevorzugt über Scheibenhalterungen fixiert. Nach Lösen des Sicherungsstiftes fliegt das Projektil mit definierter und reproduzierbarer kinetischer Energie auf die zu testende Scheibe.

In einer alternativen Ausführungsform wird die erfindungsgemäße Vorrichtung tragbar zum definierten Beschuss einer Scheibe verwendet. Die Vorrichtung enthält bevorzugt einen Handtragegriff.

Die Erfindung umfasst des Weiteren ein Verfahren zur Glasbruchprüfung und zum Beschuss von Glas mit Projektilen definierter kinetischer Energie. Dazu wird die erfindungsgemäße Vorrichtung auf eine Glasscheibe ausgerichtet, bevorzugt in einem Abstand von 1 mm bis 5 mm zur Glasscheibe. Das Ausrichten erfolgt bevorzugt per Hand. Im folgenden Schritt werden über die Position des Justagezylinders und Justageblocks eine Spannung und damit Energie in der Feder voreingestellt. Im abschließenden Schritt wird durch das Entfernen des Entlastungsstiftes die eingestellte Energie auf das Projektil übertragen und das Projektil mit definierter Energie auf die Scheibe befördert.

Die Erfindung umfasst des Weiteren die Verwendung der Vorrichtung zum definierten Beschuss von Glas, bevorzugt als Glasbruchprüfung.
Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 einen Querschnitt der erfindungsgemäßen Vorrichtung,
Figur 2 eine schematische Draufsicht einer bevorzugten Ausführungsform des Justagezylinders,
Figur 3 einen Querschnitt der erfindungsgemäßen Vorrichtung mit gespannter Feder und einen Querschnitt der erfindungsgemäßen Vorrichtung mit entspannter Feder und
Figur 4 eine schematische Darstellung der erfindungsgemäßen Vorrichtung zum Testen der Bruchbeständigkeit von Glasscheiben.

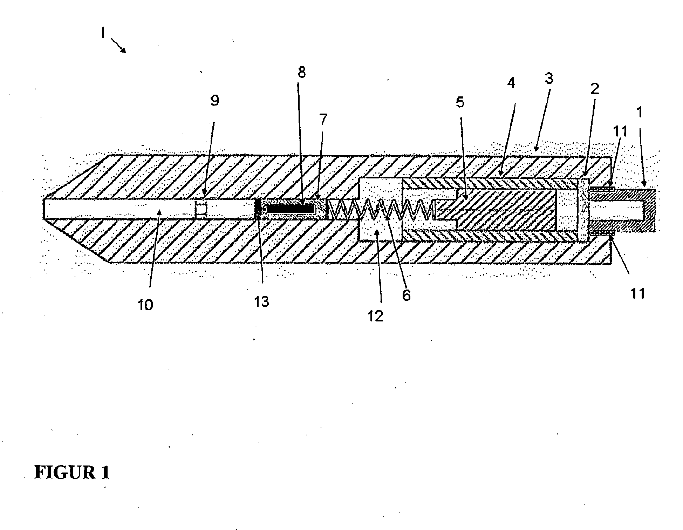

Figur 1 zeigt einen Querschnitt der erfindungsgemäßen Vorrichtung (I). Innerhalb des Hohlkörpers (3) oder Hohlraums befinden sich miteinander verbunden die Projektilkammer (10) und Justierkammer (12). Die Justierkammer (12) enthält einen Justagezylinder (4) mit einem Endstück (2) und einer am Endstück (2) befestigten Justierschraube (1) mit Schraubgewinde (11). Mit Hilfe der Justierschraube (1) lässt sich die Position des Justagezylinders (4) in der Justierkammer (12) entlang der innerhalb des Hohlraums verlaufenden gedachten Mittelachse variieren. Der Justagezylinder (4) enthält einen beweglich angeordneten Justageblock (5). Der Justageblock (5) umfasst einen am Justageblock (5) befestigten, nicht gezeigten, Griff (5a). Die mit der Justierkammer (12) verbundene Projektilkammer (10) enthält eine Projektilhalterung (7) mit Projektil (8) sowie einen Stopper (9) mit Hohlraum, der nur für das Projektil (8) aber nicht für die Projektilhalterung (7) durchlässig ist. Die Projektilhalterung (7) und der Justageblock (5) sind durch eine Feder (6) gespannt verbunden. Benachbart zu der Projektilhalterung (7) befindet sich ein beweglicher Entlastungsstift (13). Wird der Entlastungsstift (13) entfernt, so entspannt sich die Feder (6) und gibt die freiwerdende Energie an die Projektilhalterung (7) und das Projektil (8) weiter.

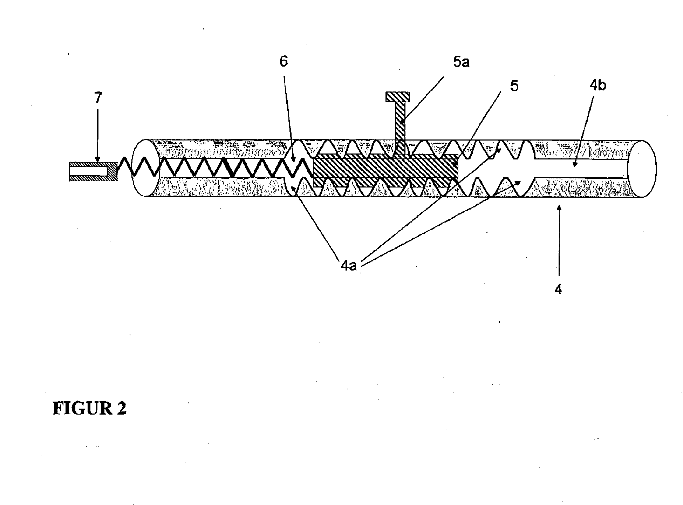

Figur 2 zeigt eine schematische Darstellung einer bevorzugten Ausführungsform des Justagezylinders (4). Innerhalb des Justagezylinders (4) ist ein Justageblock (5) beweglich gelagert. Der Justageblock (5) hat bevorzugt eine zylinderförmige Form und umfasst bevorzugt einen am Justageblock (5) befestigten Griff (5a). Der Justagezylinder (4) weist einen Schlitz (4b) auf, welcher von außerhalb des Justagezylinders (4) ein Verschieben des Justageblocks (5) über den am Justageblock (5) befestigten Griff (5a) ermöglicht. Der Justagezylinder (4) weist mit dem Schlitz (4b) verbundene Einkerbungen (4a) auf. Die Einkerbungen (4a) ermöglichen ein fixieren des am Justageblocks (5) befestigten Griffs (5a). Über die Einkerbungen (4a) lässt sich die Position des Justageblocks (5) innerhalb des Justagezylinders (4) festlegen. Über die Position des Justageblocks (5) wird die Dehnung der Feder (6) und damit die auf die Projektilhalterung (7) wirkende Kraft geregelt.

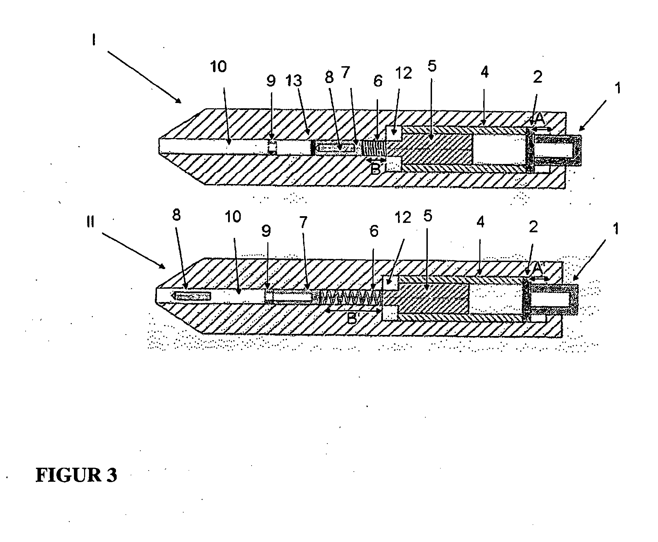

Figur 3 zeigt einen Querschnitt der erfindungsgemäßen Vorrichtung mit gespannter Feder (I) im Vergleich mit einem Querschnitt der erfindungsgemäßen Vorrichtung mit entspannter Feder (II). Der Aufbau der erfindungsgemäßen Vorrichtung (I, II) entspricht dem in Figur 1 beschriebenen. Die Vorrichtung (I) zeigt die gespannte Feder (6) als Länge B, die Vorrichtung (II) zeigt die entspannte Feder (6) als Länge B'. Die Länge B' ist größer als B in der Vorrichtung (I) mit gespannter Feder (6). Die gezeigten Längen A und A' geben die Verschiebung des Justagezylinders (4) innerhalb der Justagekammer (12) an. Die auf die Feder (6) übertragene Kraft ergibt sich aus der Position des Justageblocks (5) und somit der Länge B/B' und der Position des Justagezylinders (4) innerhalb der Justierkammer (12) über die Länge A/A'.

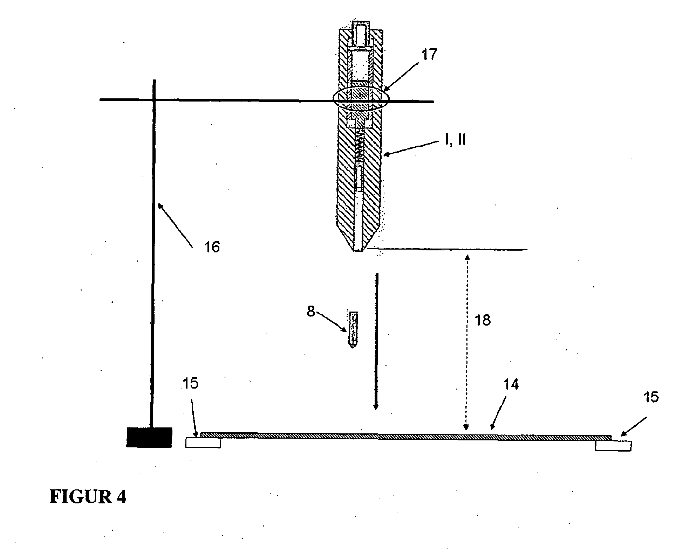

Figur 4 zeigt eine schematische Darstellung der erfindungsgemäßen Vorrichtung zum Testen der Bruchbeständigkeit von Glasscheiben. Wie oben beschrieben, wird eine erfindungsgemäße Vorrichtung (I, II) in ein Stativ (16) über eine Stativbefestigung (17) eingespannt. Senkrecht zur Vorrichtung (I, II) wird die zu untersuchende Scheibe (14) platziert. Die Scheibe (14) wird bevorzugt über Scheibenhalterungen (15) fixiert. Nach Lösen des nicht gezeigten Entlastungsstifts (13) fliegt das Projektil (8) über einen definierten Abstand (18) mit definierter und reproduzierbarer kinetischer Energie auf die zu testende Scheibe (14).

### Bezugszeichenliste

- (1): Justierschraube
- (2): Endstück
- (3): Hohlkörper / Hohlraum
- (4): Justagezylinder
- (4a): Einkerbungen
- (4b): Schlitz
- (5): Justageblock
- (5a): Griff
- (6): Feder
- (7): Projektilhalter
- (8): Projektil
- (9): Stopper
- (10): Projektilkammer
- (11): Gewinde
- (12): Justierkammer
- (13): Entlastungsstift
- (14): Scheibe
- (15): Scheibenhalterung
- (16): Stativ
- (17): Stativbefestigung
- (18): Abstand zwischen der erfindungsgemäßen Vorrichtung (I, II) und der Scheibe
- (I): erfindungsgemäße Vorrichtung (I) mit gespannter Feder (6)
- (II): erfindungsgemäße Vorrichtung mit entspannter Feder (6)
- (A, A'): Abstand des Endstückes (2) zum Justagezylinder (4)
- (B,B'): Länge der Feder (6)

## Patentansprüche

1. Vorrichtung zum definierten Beschleunigen eines Projektils, mit mindestens einem Hohlkörper (3) der in Beschleunigungsrichtung hintereinander eine Justierkammer (12) und eine Projektilkammer (10) aufweist und
a. die Justierkammer (12) einen Justagezylinder (4) mit einem Endstück (2) und einer am Endstück (2) befestigten Justierschraube (1) mit Schraubgewinde (11) sowie einen im Justagezylinder (4) beweglich angeordneten Justageblock (5) zur Anspannung einer Feder (6) innerhalb des Justagezylinders (4) aufweist,
b. die Projektilkammer (10), in Beschleunigungsrichtung vor der Justierkammer (12) angeordnet, zum Ausstoßen eines Projektils (8) eine Projektilhalterung (7) mit dem Projektil (8), einen Stopper (9) mit Hohlraum sowie einen beweglichen Entlastungsstift (13) aufweist, und
die Projektilhalterung (7) in der Projektil kammer (10) und der Justageblock (5) in der Justierkammer (12) durch die Feder (6) miteinander verbunden sind und wobei sich mit Hilfe der Justierschraube (1) die Position des Justagezylinders (4) in der Justierkammer (12) entlang der innerhalb der des Hohlraums verlaufenden gedachten Mittelachse variieren lässt.

2. Vorrichtung nach Anspruch 1, wobei der Justageblock (5) einen am Justageblock befestigten Griff (5a) aufweist

3. Vorrichtung nach Anspruch 1 oder 2, wobei der Justagezylinder (4) einen Schlitz (4b) und mit dem Schlitz (4b) verbundene Einkerbungen (4a) aufweist.

4. Vorrichtung nach einem der Ansprüche 1 bis 3, wobei der Hohlkörper (3), Justagezylinder (4) und/oder Justageblock (5) ein Metall, bevorzugt Aluminium, Titan, Eisen, Chrom, Vanadium, Kobalt, Nickel, Wolfram und/oder Legierungen davon enthält.

5. Vorrichtung nach einem der Ansprüche 1 bis 4, wobei der Hohlkörper (3), oder Justageblock (5) ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbonatblends wie Polycarbonat/Polyethylenterephthalat; Polycarbonat/Acrylnitril-Butadien-Styrol; Polycarbonat/Polybutylenterephthalat enthält.

6. Vorrichtung nach einem der Ansprüche 1 bis 5, wobei die Feder (6) ein Metall, bevorzugt Aluminium, Titan, Eisen, Chrom, Vanadium, Kobalt, Nickel, Wolfram und/oder Legierungen davon, besonders bevorzugt Klavierdraht enthält.

7. Vorrichtung nach einem der Ansprüche 1 bis 6, wobei die Feder (6) eine Federkonstante mit einem Wert von 5 N/m bis 100 N/m, bevorzugt 10 N/m bis 50 N/m aufweist.

8. Vorrichtung nach einem der Ansprüche 1 bis 7, wobei die Projektilhalterung, (7) der Stopper (9) und der Entlastungsstift (13) ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbonatblends wie Polycarbonat/Polyethylenterephthalat; Polycarbonat/Acrylnitril-Butadien-Styrol; Polycarbonat/Polybutylenterephthalat enthält.

9. Vorrichtung nach einem der Ansprüche 1 bis 8, wobei die Justierkammer (12) einen Durchmesser von 0,2 cm bis 10 cm, bevorzugt 0,5 cm bis 5 cm aufweist.

10. Vorrichtung nach einem der Ansprüche 1 bis 9, wobei die Projektilkammer (10) einen Durchmesser von 0,1 cm bis 3 cm aufweist.

11. Vorrichtung nach einem der Ansprüche 1 bis 10, wobei das Projektil (8) ein Gewicht von 1 g bis 10 g, bevorzugt 2 g bis 5 g aufweist.

12. Vorrichtung nach einem der Ansprüche 1 bis 11, wobei das Projektil (8) einen konischen, zylinderförmigen oder kugelförmigen Grundkörper aufweist.

13. Vorrichtung zum Testen der Bruchbeständigkeit von Glas, umfassend eine Vorrichtung (I) nach den Ansprüchen 1 bis 12, ein Stativ (16), eine Stativbefestigung (17) und eine Scheibe (14), wobei die Vorrichtung (I) senkrecht über der Scheibe (14) mit der Befestigung (17) im Stativ (16) eingespannt ist.

14. Verfahren zur Glasbruchprüfung und zum definierten Beschuss von Glas, umfassend eine Vorrichtung (I, II) mit mindestens einem Hohlkörper (3) der in Beschleunigungsrichtung hintereinander eine Justierkammer (12) und eine Projektilkammer (10) aufweist und die Justierkammer (12) einen Justagezylinder (4) mit einem Endstück (2) und einer am Endstück (2) befestigten Justierschraube (1) mit Schraubgewinde (11) wobei sich mit Hilfe der Justierschraube (1) die Position des Justagezylinders (4) in der Justierkammer (12) entlang der innerhalb des Hohlraums verlaufenden gedachten Mittelachse variieren lässt sowie einen im Justagezylinder (4) beweglich angeordneten Justageblock (5) zur Anspannung einer Feder (6) innerhalb des Justagezylinders (4) aufweist und die Projektilkammer (10), in Beschleunigungsrichtung vor der Justierkammer (12) angeordnet, zum Ausstoßen eines Projektils (8) eine Projektilhalterung (7) mit dem Projektil (8), einen Stopper (9) mit Hohlraum sowie einen beweglichen Entlastungsstift (13) aufweist und die Projektilhalterung (7) in der Projektilkammer (10) und der Justageblock (5) in der Justierkammer (12) durch die Feder (6) miteinander verbunden sind, wobei
a. die Vorrichtung (I, II) auf eine Glasscheibe (14) gerichtet wird,
b. eine Energie der Feder über die Position des Justagezylinders (4) sowie des Justageblocks (5) eingestellt wird und
c. das Projektil (8) durch Entfernen des Entlastungsstiftes (13) auf eine Scheibe (14) befördert wird.

15. Verwendung der Vorrichtung nach einem der Ansprüche 1 bis 13 zum definierten Beschuss von Glas, bevorzugt als Glasbruchprüfung, besonders bevorzugt als tragbare Vorrichtung zur Glasbruchprüfung.

## Claims

1. Device for the defined acceleration of a projectile, with at least one hollow body (3) comprising an adjusting chamber (12) and a projectile chamber (10) behind one another in the direction of acceleration and
a. the adjusting chamber (12) comprises an adjusting cylinder (4) with an end piece (2) and an adjusting screw (1) with a thread (11) attached to the end piece (2), as well as an adjusting block (5) arranged movably in the adjusting cylinder (4) for tensing a spring (6) inside the adjusting cylinder (4),
b. the projectile chamber (10), arranged in front of the adjusting chamber (12) in the direction of acceleration, for projecting a projectile (8), comprises a projectile holder (7) with the projectile (8), a stopper (9) with a cavity, as well as a movable release pin (13), and
the projectile holder (7) in the projectile chamber (10) and the adjusting block (5) in the adjusting chamber (12) are connected to each other via the spring (6) and the position of the adjusting cylinder (4) in the adjusting chamber (12) can be varied by means of the adjusting screw (1) along the imagined central axis running inside the cavity.

2. Device according to claim 1, wherein the adjustment block (5) comprises a grip (5a) attached to the adjustment block (5A).

3. Device according to claim 1 or 2, wherein the adjustment cylinder (4) comprises a slot (4b) and notches (4a) associated with the slot (4 b).

4. Device according to any one of the claims 1 to 3, wherein the hollow body (3), adjustment cylinder (4) and/or adjustment block (5) contains a metal, preferably aluminium, titanium, iron, chromium, vanadium, cobalt, nickel, tungsten or alloys thereof.

5. Device according to any one of the claims 1 to 4, wherein the hollow body (3) or adjustment block (5) contains a polymer, preferably polyethylene, polypropylene, polystyrene, polyurethane, polymethylmetacrylate, polyacrylate, polyester, polyamide, polyethylene terephthalate and/or mixtures or copolymers thereof, in particular preferably polycarbonate blends such as polycarbonate/polyethylene terephthalate; polycarbonate/acrylonitrile-butadiene-styrene; polycarbonate/polybutylene terephthalate.

6. Device according to any one of the claims 1 to 5, wherein the spring (6) contains a metal, preferably aluminium, titanium, iron, chromium, vanadium, cobalt, nickel, tungsten and/or alloys thereof, in particular preferably piano wire.

7. Device according to any one of the claims 1 to 6, wherein the spring (6) has a spring constant with a value of 5 N/m to 100 N/m, preferably 10 N/m to 50 N/m.

8. Device according to any one of the claims 1 to 7, wherein the projectile holder (7), the stopper (9) and the release pin (13) contain a polymer, preferably polyethylene, polypropylene, polystyrene, polyurethane, polymethylmetacrylate, polyacrylate, polyester, polyamide, polyethylene terephthalate and/or mixtures or copolymers thereof, in particular preferably polycarbonate blends such as polycarbonate/polyethylene terephthalate; polycarbonate/acrylonitrile-butadiene-styrene; polycarbonate/polybutylene terephthalate.

9. Device according to any one of the claims 1 to 8, wherein the adjusting chamber (12) has a diameter from 0.2 cm to 10 cm, preferably from 0.5 cm to 5 cm.

10. Device according to any one of the claims 1 to 9, wherein the projectile chamber (10) has a diameter of 0.1 cm to 3 cm.

11. Device according to any one of the claims 1 to 10, wherein the projectile (8) has weight from 1 g to 10 g, preferably 2 g to 5 g

12. Device according to any one of the claims 1 to 11, wherein the projectile (8) has a conical, cylindrical or spherical base body.

13. Device for testing the fracture resistance of glass, including a device (I) according to the claims 1 to 12, a stand (16), a stand mount (17) and a pane (14), wherein the device (I) is clamped vertically above the plate (14) with the mount (17) in the stand (16).

14. Process for testing for glass breakage and for the defined bombarding of glass, comprising a device (I, II) with at least one hollow body (3) which comprises an adjusting chamber (12) and a projectile chamber (10) one behind the other in the direction of acceleration and the calibration chamber (12) comprises a calibration cylinder (4) with an end piece (2) and an adjusting screw (1) mounted on the end piece (2) with a thread (11), wherein with by means of the adjusting screw (1) the position of the adjusting cylinder (4) in the calibration chamber (12) along the imagined central axle running inside the cavity can be varied, as well as an adjusting block (5) movably arranged in the adjusting cylinder (4) for tensing a spring (6) inside the adjusting cylinder (4) and the projectile chamber (10), arranged in front of the adjusting chamber (12) in the direction of acceleration, comprises a projectile holder (7) with the projectile (8), a stopper (9) with a cavity, as well as a movable release pin (13) for ejecting a projectile (8) and the projectile holder (7) in the projectile chamber (10) and the adjusting block (5) in the adjusting chamber (12) are connected to each other via the spring (6), wherein
a. the device (I, II) is directed towards a plate of glass (14),
b. an energy of the spring is set by the position of the adjustment cylinder (4) as well as the adjustment block (5) and
c. by removing the release pin (13) the projectile (8) is propelled towards a pane (14).

15. Use of the device according to any one of the claims 1 to 13 for the defined bombardment of glass, preferably as a glass breakage test, in particular preferably as a portable device for glass breakage testing.

## Revendications

1. Dispositif d'accélération définie d'un projectile, avec au moins un corps creux (3) qui présente une chambre d'ajustage (12) et une chambre de projectile (10) l'un après l'autre dans le sens de l'accélération et
a. la chambre d'ajustage (12) présente un cylindre d'ajustage (4) avec un embout (2) et une vis d'ajustage (1) avec pas de vis (11) attachée à l'embout (2), ainsi qu'un bloc d'ajustage (5) disposé mobile dans le cylindre d'ajustage (4) pour tendre un ressort (6) à l'intérieur du cylindre d'ajustage (4),
b. la chambre de projectile (10), disposé devant la chambre d'ajustage (12) dans le sens de l'accélération, pour éjecter un projectile (8) présente un porte-projectile (7) avec le projectile (8), un bouchon (9) avec une cavité, ainsi qu'une broche de décharge mobile (13), et
le porte-projectile (7) dans la chambre de projectile (10) et le bloc d'ajustage (5) dans la chambre d'ajustage (12) sont reliés entre eux par le ressort (6) et où la position du cylindre d'ajustage (4) dans la chambre d'ajustage (12) le long de l'axe central pensé à l'intérieur de la cavité peut être modifiée à l'aide de la vis d'ajustage (1).

2. Dispositif selon la revendication 1, où le bloc d'ajustage (5) présente une poignée fixée au bloc d'ajustage (5a).

3. Dispositif selon la revendication 1 ou 2, où le cylindre d'ajustage (4) présente une fente (4b) et des encoches (4a) associées à la fente (4b).

4. Dispositif selon l'une des revendications 1 à 3, où a le corps creux (3), le cylindre d'ajustage (4) ou le bloc d'ajustage, (5) contient un métal, de préférence de l'aluminium, du titane, du fer, du chrome, du vanadium, du cobalt, du nickel, du tungstène et/ou des alliages de ceux-ci.

5. Dispositif selon l'une des revendications 1 à 4, où le corps creux (3) ou le bloc d'ajustage (5) contient un polymère, de préférence du polyéthylène, du polypropylène, du polystyrène, du polyuréthane, du polyméthacrylate, du polyacrylate, du polyester, du polyamide, du polyéthylène téréphtalate et/ou des mélanges ou copolymères de ceux-ci, de préférence plus particulièrement des mélanges à base de polycarbonate, tels que le polycarbonate/polyéthylène téréphtalate ; polycarbonate/acrylonitrile-butadiène-styrène ; polycarbonate/polybutylène téréphtalate.

6. Dispositif selon l'une des revendications 1 à 5, où le ressort (6) contient un métal, de préférence de l'aluminium, du titane, du fer, du chrome, du vanadium, du cobalt, du nickel, du tungstène et/ou des alliages de ceux-ci, et de préférence plus particulièrement du fil de piano.

7. Dispositif selon l'une des revendications 1 à 6, où le ressort (6) présente une constante du ressort d'une valeur comprise entre de 5 N/m et 100 N/m, de préférence entre 10 N/m et 50 N/m.

8. Dispositif selon l'une des revendications 1 à 7, où le porte-projectile, (7) le bouchon (9) et la broche de décharge (13) contiennent un polymère, de préférence du polyéthylène, du polypropylène, du polystyrène, du polyuréthane, du polyméthacrylate, du polyacrylate, du polyester, du polyamide, du polyéthylène téréphtalate et/ou des mélanges ou copolymères de ceux-ci de préférence des mélanges à base de polycarbonate particulièrement, tels que le polycarbonate/polyéthylène téréphtalate ; polycarbonate/acrylonitrile-butadiène-styrène ; polycarbonate/polybutylène téréphtalate.

9. Dispositif selon une des revendications 1 à 8, où la chambre d'ajustage (12) présente un diamètre compris entre 0,2 cm et 10 cm, de préférence entre 0,5 cm et 5 cm.

10. Dispositif selon l'une des revendications 1 à 9, où la chambre de projectile (10) présente un diamètre compris entre 0,1 cm et 3 cm.

11. Dispositif selon une des revendications 1 à 10, où le projectile (8) présente un poids compris entre 1g et 10 g, de préférence entre 2 g et 5 g.

12. Dispositif selon l'une des revendications 1 à 11, où le projectile (8) présente un corps conique, cylindrique ou sphérique.

13. Dispositif pour tester la résistance au la fracture de verre, comprenant un dispositif (I) selon les revendications 1 à 12, un pied (16), une fixation pour un pied (17) et une feuille de verre (14), où le dispositif (I) est maintenu verticalement au-dessus de la feuille de verre (14) dans le pied (16) avec la fixation (17).

14. Procédure pour tester le bris de verre et pour le bombardement défini de verre, comportant un dispositif (I, II) avec au moins un corps creux (3) qui présente une chambre d'ajustage (12) et une chambre de projectile (10), l'un après l'autre dans le sens de l'accélération et la chambre d'ajustage (12) présente un cylindre d'ajustage (4) avec un embout (2) et une vis d'ajustage (1) ayant un pas de vis (11) attaché à l'embout (2), où à l'aide de la vis d'ajustage (1), la position du cylindre d'ajustage (4) dans la chambre d'ajustage (12) le long de l'axe central pensé à l'intérieur de la cavité peut être modifiée à l'aide de la vis d'ajustage (1), ainsi qu'un bloc d'ajustage (5) disposé mobile dans le cylindre d'ajustage (4) pour tendre un ressort (6) à l'intérieur du cylindre d'ajustage (4) et la chambre de projectile (10), disposé devant la chambre d'ajustage (12) dans le sens de l'accélération, pour éjecter un projectile (8) présente un porte-projectile (7) avec le projectile (8), un bouchon (9) avec une cavité, ainsi qu'une broche de décharge mobile (13), et le porte-projectile (7) dans la chambre de projectile (10) et le bloc d'ajustage (5) dans la chambre d'ajustage (12) sont reliés entre eux par le ressort (6), où
a. le dispositif (I, II) est dirigé sur une feuille de verre (14),
b. une énergie du ressort est réglée par la position du cylindre d'ajustage (4) ainsi que de celle du bloc d'ajustage et
c. le projectile est transporté sur une feuille de verre par l'enlèvement de la broche de décharge.

15. L'utilisation du dispositif selon l'une des revendications 1 à 13 pour le bombardement défini de verre, de préférence comme test de bris de verre, en particulier de préférence comme dispositif portable pour tester le bris de verre.
